# EUROPÄISCHE PATENTANMELDUNG

(11) **EP 4 730 057 A1**
(43) Veröffentlichungstag der Anmeldung: **22.04.2026**
(21) Anmeldenummer: 25202396.5
(22) Anmeldetag: 16.09.2025
(51) Int. Cl.: G05B 19/19, B30B 15/14, G05B 19/4061, G05B 19/418

(54) **VERFAHREN ZUR BEWEGUNGSSTEUERUNG EINER UMFORMANLAGE**

(30) Priorität: 18.10.2024 DE 102024130355
(71) Anmelder: ANDRITZ Schuler Pressen GmbH, 73033 Göppingen (DE)
(72) Erfinder: Schöllhammer, Dietmar, 73035 Göppingen (DE)
(74) Vertreter: RavensPAT Patentanwälte Partnerschaft mbB

(57) **Zusammenfassung**

Die Erfindung betrifft ein Verfahren zur Bewegungssteuerung für eine Umformanlage, mit welchem eine Anpassung und Synchronisation von Bewegungsabläufen erfolgen kann und mit welchem eine erforderliche neue Abstimmung zur Synchronisation von Bewegungsabläufen in einem Teilbereich mit minimalem Aufwand ohne Auswirkung auf andere Teilbereiche oder eine gesamte Zeit eines Arbeitszyklus einer Umformanlage, insbesondere einer Mehrstufenpresse erfolgen kann.

## Beschreibung

Die Erfindung betrifft ein Verfahren zur Bewegungssteuerung einer Umformanlage gemäß dem Oberbegriff des Anspruchs 1.

Bei Umformanlagen, insbesondere bei Presseneinrichtungen mit mehreren Pressenstufen sind komplexe Bewegungsabläufe zwischen verschiedenen bewegten Einheiten im laufenden Betrieb derart abzustimmen, das die Bewegungskurven und Bewegungszustände einzelner bewegter Einheiten zueinander definiert in einer Beziehung stehen. Die Bewegungen der Stößel der einzelnen Pressenstufen müssen mit den Bewegungen der Transfereinheiten zum Transport der Werkstücke zwischen den Pressenstufen abgestimmt werden, um Kollisionen oder anderweitige Störungen im Betriebsablauf zu vermeiden. Ein schneller Arbeitszyklus bedingt dabei eine präzise Abstimmung und Steuerung der Bewegungsabläufe im koordinierten Betrieb, welche über die gesamte Presseneinrichtung erfolgt sein muss.

Der Begriff der Bewegungskurve einer Presseneinrichtung bezieht sich dabei auf den zeitlichen Verlauf der Position oder des Weges z.B. des Pressenstößels oder der Transfereinheit während eines kompletten Arbeitszyklus der Presse. Der Bewegungszustand einer Presseneinrichtung bezieht sich wiederum auf den aktuellen Zustand oder die Art und Weise, wie sich die bewegten Einheiten der Presseneinrichtung (z.B. Stößel, Transfer) zu einem bestimmten Zeitpunkt bewegen. Er beschreibt also die dynamischen Eigenschaften der Presseneinrichtung während eines Arbeitszyklus und umfasst mehrere wichtige Parameter wie z.B. Geschwindigkeit, Beschleunigung sowie Bewegungsrichtung.

Der Arbeitszyklus einer Presseneinrichtung lässt sich dabei mehrere Teilbereiche unterteilen. Hierbei sind Bewegungsabläufe in prozessrelevante Bewegungsabschnitte, beispielsweise den tatsächlichen Umformvorgang, und prozessunabhängige Bewegungsabschnitte, beispielsweise die Bewegung des Stößels im geöffneten Zustand, während die Transfereinheit ein Werkstück einlegt oder entnimmt, zu unterteilen.

Bei der Werkstückbearbeitung in einer Presseneinrichtung sind im prozessrelevanten Bereich bestimmte Vorgabeparameter gegeben, die Herstellung fehlerfreier Pressteile (sogenannter Gutteile) ermöglichen. Verändern oder verschieben sich nun Parameter im Umformprozess, so kann es zu fehlerbehafteten Pressteilen (sogenannten Schlechtteilen) kommen. Beispielsweise können bei veränderter Werkstückschmierung oder Toleranzen in der Materialstärke Anpassungen der Vorgabeparameter notwendig werden. Sodann ist es erforderlich, die Bewegungsabläufe in diesem Bereich so anzupassen, dass der Prozess wieder innerhalb eines nun verschobenen Parametersatzes betrieben wird, und somit wieder fehlerfreie Pressteile hergestellt werden.

Eine Änderung in nur einem Teilbereich hat aber immer Auswirkungen auf die Abstimmung von Bewegungsabläufen z.B. zwischen den Transfereinheiten und einem Umformwerkzeug, z.B. einem Pressenstößel. Es kann also nicht ausgeschlossen werden, dass es nach einer solchen Änderung zu einer Kollision der betroffenen bewegten Einheiten kommt. Überdies ist der Arbeitszyklus der Anlage insgesamt nicht zu gefährden. Das ist jedoch dann gegeben, wenn statt einer lokalen Änderung globale Einstellwerte verändert werden müssen. Dies ist bei Presseneinrichtungen dann der Fall, wenn zur Anpassung der Umformgeschwindigkeit die Liniengeschwindigkeit und nicht die Geschwindigkeit im betroffenen Teilbereich geändert wird.

Anlagen, die veränderliche Geschwindigkeits- und Synchronisierungszustände ermöglichen, sind typischerweise nur für einen speziellen Zustand geprüft und lassen andere Zustände nicht, bzw. nur nach dem Durchlaufen einer erneuten aufwendigen Prüfmethode zu.

Es ist Aufgabe der Erfindung, ein Verfahren zur Bewegungssteuerung für eine Umformanlage vorzuschlagen, mit welchem eine Anpassung und Synchronisation von Bewegungsabläufen erfolgen kann und mit welchem eine erforderliche neue Abstimmung zur Synchronisation von Bewegungsabläufen in einem Teilbereich mit minimalem Aufwand ohne Auswirkung auf andere Teilbereiche oder eine gesamte Zeit eines Arbeitszyklus einer Umformanlage, insbesondere einer Mehrstufenpresse erfolgen kann.

Dabei ist es entscheidend, dass durch die Veränderung in diesem Bereich nicht gleichzeitig andere Bereiche verändert werden, die bisher prozess-stabil waren.

Diese Aufgabe wird ausgehend von den Merkmalen des Oberbegriffs des Anspruchs 1 durch die kennzeichnenden Merkmale des Anspruchs 1 gelöst. In den jeweiligen Unteransprüchen sind vorteilhafte und zweckmäßige Weiterbildungen angegeben.

Die Erfindung betrifft somit ein Verfahren zur Bewegungssteuerung einer Umformanlage,
wobei die Umformanlage mindestens zwei bewegte Einheiten, insbesondere einen Pressenstößel und eine Transfereinheit, umfasst.

Zur Durchführung des Verfahrens werden eine Mehrzahl an Positionspaaren ermittelt,
wobei ein Positionspaar eine Position einer ersten bewegten Einheit, insbesondere einer Transfereinheit und eine Position einer zweiten bewegten Einheit, insbesondere eines Pressenstößels umfasst. Bei dem Verfahren ist jedem Positionspaar ein Positionskriterium zugeordnet.

Dabei ist vorgesehen, dass mindestens einer ersten Einheit der Umformanlage eine
Grenzgeometrie zugeordnet ist, welche einen Abstand gegenüber einer Außenkontur der Einheit definiert.

Durch eine Steuereinrichtung werden die Bewegungsabläufe der bewegten Einheiten der
Umformanlage derart abstimmt, dass eine Bewegungssynchronisation im koordinierten Betrieb der Umformanlage erfolgt.

Die Erfindung ist dadurch gekennzeichnet, dass
- das Positionskriterium ein Positivkriterium (+) für eine erlaubte Position oder ein Negativkriterium (-) für eine verbotene Position umfasst,
- wobei ein Positivkriterium (+) demjenigen Positionspaar zugeordnet ist, bei welchem sich die zweite bewegte Einheit außerhalb der Grenzgeometrie der ersten bewegten Einheit befindet,
- wobei ein Negativkriterium (-) demjenigen Positionspaar zugeordnet ist, bei welchen sich die zweite bewegte Einheit zumindest teilweise innerhalb der Grenzgeometrie der ersten bewegten Einheit befindet,
- wobei die Steuereinrichtung Positionspaare zur Abstimmung der Bewegungsabläufe heranzieht, welche ein Positivkriterium (+) umfassen, und somit die zweite bewegte Einheit im Abstand zur ersten bewegten Einheit in einem positiven Bewegungsraum außerhalb der Grenzgeometrie der ersten bewegten Einheit bewegt wird, und welche ein Negativkriterium (x) umfassen und damit einen unzulässigen negativen Bewegungsraum für die zweite bewegte Einheit (2) darstellen.

Durch ein derartiges Verfahren wird anstatt einer tatsächlichen Abstandsbetrachtung zur Bestimmung von erlaubten, positiven Zuständen der Einheiten zueinander, eine Bereichsdefinition vorgenommen. Außerhalb eines verbotenen Bereichs sind damit alle möglichen Positionen, und damit Anlagenzustände erlaubt, was der Steuereinrichtung ein erhebliches Mehr an Freiheitsgraden zur Verfügung stellt, um die für den Betrieb notwendigen Bewegungsabläufe zu synchronisieren.

Somit kann die Abstimmung der Bewegungsabläufe in der Steuereinrichtung selbst zuverlässig und mit geringem Aufwand erfolgen.

Überdies ist vorgesehen, dass die Steuereinrichtung zur Abstimmung der Bewegungsabläufe ermittelt, wann der Übergang von einem Positionspaar mit Negativkriterium zu einem Positionspaar mit Positivkriterium erfolgt, und aus dem Übergang den erlaubten, positiven Bewegungsraum der zweiten bewegten Einheit, außerhalb der Grenzgeometrie der ersten bewegten Einheit definiert, in welchem ein Bewegungsablauf der zweiten bewegten Einheit flexibel, insbesondere ohne Ermittlung weiterer konkreter Positionspaare, abgestimmt werden kann.

Durch die Betrachtung des Übergangs, bei welchem ein Positionspaar zum ersten Mal von einem Negativkriterium in ein Positivkriterium wechselt, ist der danach folgende Bereich an Positionen, bei beibehaltener Bewegungsrichtung, ein erlaubter, positiver Bereich. Da die Steuereinrichtung für den erlaubten positiven Bereich für alle weiteren Positionen ein Positivkriterium annehmen kann, ist keinerlei weitere Überprüfung erforderlich.

Überdies ist vorgesehen, dass die Bewegungsabläufe der bewegten Einheiten der Umformanlage in prozessrelevante Bewegungsabschnitte und prozessunabhängige Bewegungsabschnitte unterteilt sind, und die Steuereinrichtung diese Bewegungsabschnitte kennt. Die Steuereinrichtung nimmt dabei eine Anpassung der Bewegungsabläufe auf der Basis von Positionspaaren und Grenzgeometrien sodann nur außerhalb der prozessrelevanten Bewegungsabschnitte vor, wenn diese durch eine Veränderung der Vorgabeparameter notwendig sind, beispielsweise um wieder Gutteile zu erhalten.

Dabei ist vorgesehen, dass die Steuereinrichtung prozessrelevante Bereiche kennt, innerhalb deren die Vorgabeparameter erhalten bleiben sollen und andere Bereiche, die zur Bewegungskoordination herangezogen werden können für die Abstimmung bevorzugt.

Hieraus ergibt sich auch eine höhere Prozessstabilität, da ein Großteil der Parameter erhalten bleibt. Grundsätzlich erhöht sich durch eine derart einfache Anpassung auch die Bereitschaft Änderungen vorzunehmen. Dies fördert wiederum die Qualität der Werkstücke. Durch eine Anpassung mit geringem Aufwand wird die Ausbringungsleistung trotz Anpassung hochgehalten.

Weiterhin kann es vorgesehen sein, dass virtuelle Positionspaare durch Simulation ermittelt werden, insbesondere unter Einsatz eines CAD-Modells der Umformanlage virtuell ermittelt werden.

Auf diese Weise kann in einer Simulation, ggf. auch für einen initialen Betrieb der Umformanlage eine Ermittlung der erlaubten, positiven Bereiche und der verbotenen, negativen Bereiche mit externer Rechenkapazität erfolgen. Vereinzelt können jedoch die CAD Modelle gegenüber den realen Geometrien der Einheiten einer Umformanlage abweichen, wobei je nach zur Verfügung sehender Rechenkapazität die Genauigkeit der ermittelten virtuellen Positionspaare in einen Fehlerparameter eingebettet sein kann.

Alternativ oder ergänzend kann daher vorgesehen werden, dass reale Positionspaare durch schrittweises Anfahren der Positionen der bewegten Einheiten in der Umformanlage selbst real ermittelt werden.

Das schrittweise Anfahren der Positionspaare bis zur Bestimmung eines Grenzbereichs, der durch die Grenzgeometrie definiert wird, ermöglicht die Ermittlung von erlaubten positiven Positionspaaren bzw. des Bewegungsraums außerhalb der verbotenen negativen Positionspaare, ohne dass die dynamischen Bewegungsabläufe der Umformanlage im realen Betrieb berücksichtigt werden müssen.

Beispielsweise kann beim schrittweisen Heranfahren eines Stößels an eine Transfereinrichtung eine Abstandsgrenze bestimmt werden, welche den geringst zulässigen Abstand zwischen Stößel und Transfereinheit darstellt. Jeder darüber liegende Abstand kann daher als zulässig angesehen werden. Durch Kenntnis des Übergangs von einem Positionspaar mit Negativkriterium zu einem Positionspaar mit Positivkriterium kann somit ein freier Bewegungsraum, insbesondere im geöffneten Zustand ermittelt werden, welcher für die Bewegungskurve des Stößels zur Verfügung steht.

Diese Herangehensweise ist sowohl für das reale Anfahren der Positionspaare, als auch für das virtuelle ermitteln der Positionspaare denkbar, wobei in der virtuellen Herangehensweise eine hinreichende Präzision der genutzten CAD-Objekte gegeben sein muss.

Es ist überdies vorgesehen, dass wiederum die Steuereinrichtung zur Abstimmung der Bewegungsabläufe Dynamikkriterien der einzelnen bewegten Einheiten heranzieht, insbesondere Trägheitskriterien, Antriebskriterien sowie dynamische Grenzwertkriterien wie beispielsweise Belastungsgrenzen. Sodann können die Bereiche der erlaubten Positionspaare für die Ausbildung einer Abstimmung einer synchronisierten Bewegung im Arbeitszyklus dahingehend gewichtet werden, dass diese auch mit der notwendigen Dynamik für einen kontinuierlichen angestrebten Betrieb der Umformanlage angefahren werden können.

Zur Bestimmung der positiven Positionspaare bzw. der Grenzbereichs, der durch die Grenzgeometrie definiert wird, können sowohl ein Abstandsvektor, welcher vorzugsweise als senkrecht auf der Oberfläche stehender Abstandsvektor zu verstehen ist, oder mehrere diskrete Abstandsvektoren, welche eine Menge von einzuhaltenden Abständen von der Oberfläche der betreffenden bewegten Einheit darstellen, herangezogen werden.

Die Nutzung diskreter Vektoren erleichtert überdies die Bestimmung zulässiger positiver Positionspaare bzw. die Definition eines Bereichs außerhalb der verbotenen negativen Positionspaare mit geringer Rechenleistung. Dabei sind die Abstandsvektoren und deren Anzahl davon abhängig, wie komplex die Geometrie der betreffenden bewegten Einheit selbst aufgebaut ist. Je höher die Komplexität der Geometrie der bewegten Einheit, desto höher fällt in der Regel auch die Anzahl der zu betrachtenden Abstandsvektoren aus.

Es ist jedoch auch bei entsprechender Rechenkapazität oder Wahl des digitalen Objektmodells möglich, die Grenzgeometrie durch eine umlaufende, oder teilweise umlaufende einhüllende Grenzfläche mit gegebenem Abstand zur Oberfläche der bewegten Einheit zu definieren.

Sodann können definierte geometrische und abgeschlossene Räume ermittelt werden, in welchen die bewegten positioniert werden dürfen. Ebenso können Ausschlusskriterien für Räume definiert werden, in welchen die Einheiten nicht gemeinsam angeordnet werden dürfen.

Durch das oben beschriebene Verfahren und dessen Ausgestaltungen kann der Aufwand für eine Anpassung geringgehalten werden, da dieser nur für einen Teilbereich erfolgen muss und für alle anderen Teilbereiche keinerlei Überprüfung erforderlich ist. Hieraus ergibt sich auch eine höhere Prozessstabilität, da ein Großteil der Parameter erhalten bleibt. Grundsätzlich erhöht sich durch eine derart einfache Anpassung auch die Bereitschaft Änderungen vorzunehmen. Dies fördert wiederum die Qualität der Werkstücke. Durch eine Anpassung mit geringem Aufwand wird die Ausbringungsleistung trotz Anpassung hochgehalten.

Es kann auch vorgesehen sein, eine ereignisbedingte Anpassung eines Bewegungsablaufs in einem der Teilbereiche durchzuführen, wenn der Bewegungsablauf einer Einheit oder beider Einheiten zu einer Verschlechterung der Qualität der hergestellten Werkstücke führt, wobei dies beispielsweise dann der Fall sein kann, wenn die Werkstücke zu schnell oder zu langsam umgeformt werden. Insofern liegt hier dann eine qualitätsbedingte Anpassung vor. Durch eine derartige Anpassung lässt sich rasch das angestrebte Qualitätsniveau wiederherstellen.

Unter einer Synchronisierung der Bewegungsabläufe wird im Sinne der Erfindung verstanden, dass die bewegten Einheiten mit ihren räumlichen Positionen, welche diese während ihrer Bewegung zu gleichen Zeitpunkten derart aufeinander abgestimmt sind, dass zu keinem Zeitpunkt eine räumliche Überlagerung der bewegten Einheiten im Sinne einer Kollision vorliegt. Selbstverständlich kann eine Synchronisierung der Bewegungsabläufe auch eine Einbeziehung unbewegter Einheiten, wie zum Beispiel eines Gesenks oder eines Unterwerkzeugs, umfassen. Bewegte Einheiten können zum Beispiel ein Stößel und/oder eine Transfereinrichtung sein. Die bereits beschriebenen Bewegungskurven und Bewegungszustände werden dabei zwischen den Einheiten zueinander definiert.

Unter einer Grenzgeometrie einer bewegten Einheit wird eine gedachte Geometrie verstanden, welche von der Außengeometrie der bewegten Einheit in einen Umgebungsraum hinein beabstandet ist. Bei zweidimensionaler Betrachtung kann eine Mantelgeometrie in einem Sonderfall z.B. durch eine Parallelkontur einer Kontur der bewegten Einheit gebildet sein. Bei dreidimensionaler Betrachtung kann eine Mantelgeometrie als in den Umgebungsraum ragende Wolke verstanden werden, welche mit ihrer Oberfläche zu einer Hüllgeometrie der bewegten Einheit z.B. äquidistant beabstandet ist.

Im Sinne der Erfindung wird unter einer ereignisbedingten Anpassung eines Bewegungsablaufs einer bewegten Einheit jeder Fall verstanden, durch welche es erforderlich ist, dass die bewegte Einheit einen geänderten Bewegungsablauf aufweist, so dass diese z.B. zu gleichen Zeitpunkten andere Positionen einnimmt. Dies kann durch einen geänderten Verfahrweg und/oder durch ein geändertes Geschwindigkeitsprofil bedingt sein. Als auslösendes Ereignis kommt z.B. eine manuelle oder automatische Veränderung eines Vorgabe-Parameters wie z.B. eine Umformgeschwindigkeit in Frage. Auslöser für eine Veränderung eines Vorgabe-Parameters kann z.B. eine Veränderung der Qualität des umgeformten Werkstücks sein, welcher durch eine Anpassung des Vorgabe-Parameters gegengesteuert werden soll.

Im Sinne der Erfindung werden bewegte Einheiten dann als direkt aufeinanderfolgend angesehen, wenn diese theoretisch miteinander kollidieren könnten.

Bei einer Ausführung des Verfahrens ist vorgesehen, dass wenn die Positionspaare sowie die Positionskriterien vorliegen, die Kurve der Bewegung der bewegten Einheiten der Anlage in Einzelheiten so verstellt werden kann, dass eine Randbedingung der erlaubten positiven der Positionspaare nicht verletzt wird. Außerhalb der verbotenen negativen Positionspaare befinden sich zulässige positive Bewegungsräume. Eine weitere Prüfung der Bewegungskurven bis auf das Positivkriterium zur Bewegung in diesen Räumen ist dadurch nicht erforderlich.

Weitere Einzelheiten der Erfindung werden in der Zeichnung anhand von schematisch dargestellten Ausführungsbeispielen beschrieben.

Hierbei zeigt:
- Figur 1:: eine schematische Darstellung einer Umformanlage einer Presseneinrichtung;
- Figur 2:: eine schematische Darstellung einer Transfereinheit mit Grenzgeometrie;
- Figur 3:: eine schematische Übersicht der Positionen der Umformanlage;
- Figur 4:: ein erstes Positionspaar mit Positivkriterium;
- Figur 5:: ein zweites Positionspaar mit Positivkriterium;
- Figur 6:: ein drittes Positionspaar mit Negativkriterium;
- Figur 7:: ein viertes Positionspaar mit Positivkriterium;

Gleiche Bestandteile sind mit gleichen Bezugszeichen versehen.

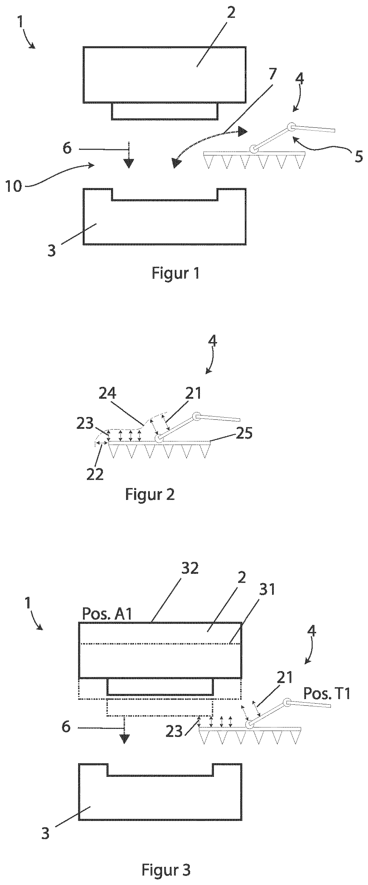

Im Einzelnen zeigt Fig. 1 eine Umformanlage 1, welche einen Pressenstößel 2 sowie ein Pressenunterteil 3 umfasst. Zum Transport von Werkstücken (nicht dargestellt) wird eine Transfereinheit 4 an einem Gelenkarm 5 in den Arbeitsbereich 10 zwischen Pressenstößel 2 und Pressenunterteil 3 eintreten. Dabei verläuft die Bewegung der Transfereinheit 4 entlang einer Bewegungsbahn 7, wohingegen der Pressenstößel sich entlang einer Schließbewegung 6 zur Ausführung eines Umformvorgangs bewegt.

Die Bewegungsabläufe sind schematisch angedeutet und stellen in der Realität erheblich komplexere Kurven und Abläufe dar.

Zum abgestimmten Betrieb einer Umformanlage 1 ist es erforderlich, die Bewegungsabläufe der einzelnen bewegten Einheiten 2 und 4 in ihren Bewegungsbahnen 6 und 7 derart aufeinander abgestimmt zu synchronisieren, dass keine Kollision erfolgt und bei der Umformung die Schließbewegung derart ausgeführt wird, dass ein fehlerfreies Bauteil (Gutteil) erzeugt wird.

Figur 2 zeigt eine Transfereinheit 4. Auf einem Anteil der Oberfläche der Transfereinheit 4 sind Abstandsvektoren 21, 22 und 23 angeordnet, welche denjenigen Bereich der Transfereinheit 4 darstellen, der beim Eintritt in den Arbeitsbereich der Umformanlage 1 zwischen Pressenstößel 2 und Pressenunterteil 3 am ehesten Kollisionsgefährdet ist. Diese Abstandsvektoren 21 sind je nach Geometrie im Bereich des Gelenkarms 5 größer ausgebildet, da hier gegenüber der Abstandsvektoren 22 und 23 an dem Balken 25 der Transfereinheit ein größerer Abstand zur Kollisionsvermeidung einzuhalten ist.

Die der Transfereinheit 4 abgewandten Enden der Abstandsvektoren 21, 22 und 24 definieren durch diskrete Punkte eine Grenzgeometrie, welche für das erfindungsgemäße Verfahren als Grenzgeometrie für den Wechsel zwischen einem Positivkriterium und einem Negativkriterium dient.

Es ist auch möglich, durch diese Vektoren oder über anderweitige Mittel eine kontinuierliche Grenzgeometrie 24 in Form einer Einhüllenden zu definieren, welche den Zweck des Verfahrens erfüllt. Exemplarisch ist die Grenzgeometrie hier nur auf der dem Pressenstößel 2 zugewandten Seite dargestellt. Es versteht sich, dass diese Geometrie auch an anderen Stellen, insbesondere der Unterseite, entsprechend berücksichtigt wird, je nachdem, an welcher Stelle sich mit anderen Einheiten Positionspaare ergeben können, die einen kollisionsvermeidenden Abstand bedingen.

Nachfolgend wird der Begriff der Grenzgeometrie durch die Einhüllende 24 repräsentiert, wobei im Sinne der Erfindung beide Arten der Bestimmung, durch die konkrete Punktewolke der Abstandsvektoren oder die kontinuierliche Einhüllende einer Fläche als Grenzgeometrie beansprucht sind.

Figur 3 zeigt einen Zustand der Umformanlage 1, in welchem ein Positionspaar zur Ermittlung einer zulässigen Position am Rande der Grenzgeometrie eingestellt wird. Dies kann beispielsweise in einer Simulation, oder direkt an der Anlage durch schrittweises Anfahren an die durch die Abstandsvektoren 21, 22 und 23 definierten Abstände erfolgen. Dabei wird der Pressenstößel 2, welcher sich in einer Position A1, 32 befindet von einer Position 32 in eine Position 31 (gestrichelt dargestellt) in Schließrichtung 6 abgesenkt. Die Transfereinheit 4 befindet sich in Position 1, so dass der Pressenstößel 2 in Position 31 gerade an der Grenze des Abstandsvektors 23 anliegt. Sodann kann dieses Positionspaar als erlaubtes, positives Positionspaar mit positivem Positionskriterium + gespeichert werden.

Neben dem Positionspaar aus Pressenstößel 2 in Position 31 und Transfereinheit 4 in Position T1 sind auch alle Positionen außerhalb der Grenzgeometrie 24 (bzw. definiert durch 21, 22, 23, ....) des Pressenstößels 2, also z.B. auch die Position 32 erlaubt, so dass lediglich das Abstandskriterium Pressenstößel außerhalb des Grenzbereichs zu prüfen ist.

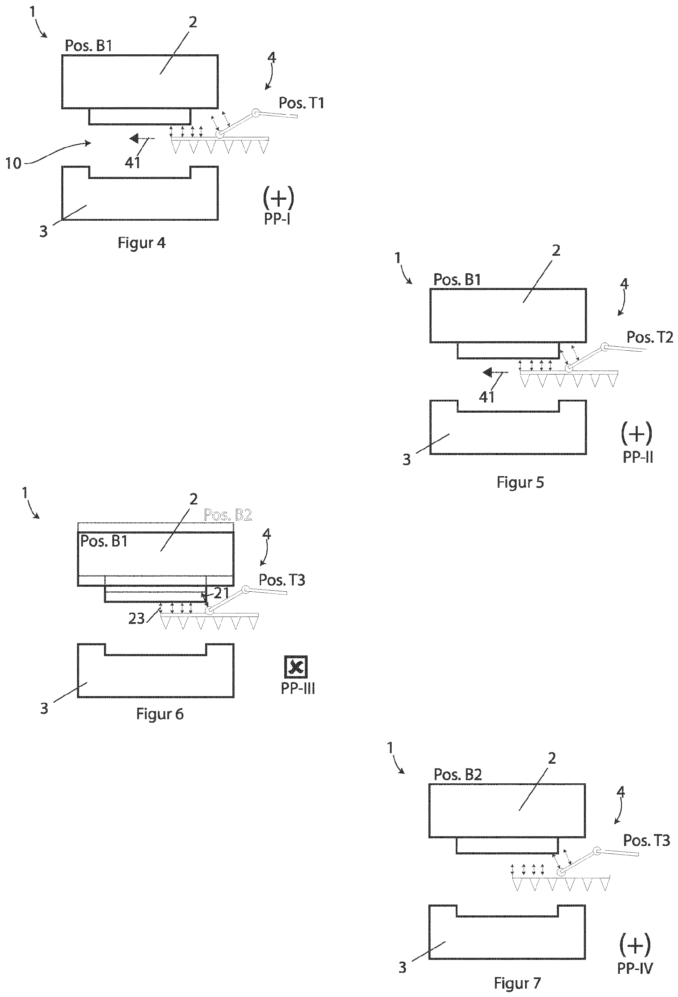

Die Figuren 4, 5, 6 und 7 zeigen einen Ablauf zur Ermittlung von Positionspaaren mit positivem Positionskriterium.

In Figur 4 befindet sich der Pressenstößel 2 in Position B1. Die Transfereinheit 4 befindet sich in Position T1. Bei einer Bewegung der Transfereinheit 4 in Bewegungsrichtung 41 tritt diese mit dem Balken 25 kontinuierlich in den Arbeitsbereich 10 ein. Da der Pressenstößel 2 stets außerhalb der Grenzgeometrie angeordnet ist, erhält dieses Positionspaar PP-I ein positives Positionskriterium in Form eines Positivkriteriums (+).

In Figur 5 bewegt sich die Transfereinheit 4 weiter in den Arbeitsbereich 10 entlang der Bewegungsrichtung 41 hinein, so dass der Gelenkarm 5 ebenfalls in den Arbeitsbereich eintritt. Dadurch werden die Abstandsvektoren 21 des Gelenkarms 5 für die Bestimmung der Grenzgeometrie und des Positionskriteriums relevant. In der gezeigten Position T2 der Transfereinheit ist das Positionskriterium noch ein Positivkriterium, da die Position B1 des Pressenstößels 2 noch außerhalb der Grenzgeometrie 24 liegt. Das Positionspaar PP-II ist somit erlaubt.

In Figur 6 ist der Fall dargestellt, dass die Transfereinheit 4 nunmehr in einer Position T3 weiter in den Arbeitsbereich eingefahren ist. Der Pressenstößel 2 verletzt nun in seiner Position B1 die Grenzgeometrie 24 im Bereich des Abstandsvektors 21. Das Positionskriterium des Positionspaars PP-III aus den Positionen B1 und T3 ist somit ein Negativkriterium (x), und stellt kein zulässiges Positionspaar für die Abstimmung der Bewegungsabläufe dar. Die Presse müsste nun den Pressenstößel 2 sprungartig auf eine Position B2 (gestrichelt dargestellt) bewegen, um als Positionskriterium ein Positivkriterium (+) zu erzielen. Diese sprunghafte Bewegung ist jedoch aufgrund der dynamischen Eigenschaften wie Trägheit, Drehmomente der Antriebe und sonstiger Kriterien nicht möglich.

Zur Abstimmung der Bewegungsabläufe innerhalb Positionspaare mit einem positiven Positionskriterium (+) wird die Steuereinrichtung nun eine andere erlaubte Position, außerhalb der Grenzgeometrie 24 der Transfereinheit 4 heranziehen.

Wird nun der Pressenstößel 2 wie in Figur 7 dargestellt auf Position B2 gehalten, so stellt auch beim weiteren Einfahren der Transfereinheit 4 in den Arbeitsbereich 10 auf die Position T3 keine Verletzung der Grenzgeometrie dar. Das Positionspaar PP-IV aus den Positionen B2 und T3 erhält damit als Positionskriterium ein Positivkriterium (+) und kann für die Abstimmung des Bewegungsablaufs herangezogen werden.

Die oben beschriebenen Abläufe lassen sich daher bei bekannter Anzahl an erlaubten und verbotenen Positionspaaren nutzen, um ohne besonderen Rechenaufwand auf der Basis diskreter Positionspaare eine Grenzbedingung zu definieren, außerhalb derer alle verfügbaren Positionen erlaubt sind. Auf diese Weise kann für die Anpassung eines Bewegungsablaufs an einer Umformanlage 1 einer Pressenstraße (nicht dargestellt) eine Veränderung der Positionen der bewegten Einheiten zueinander synchronisiert werden, sodass alle prozessrelevanten Vorgabeparameter eingehalten werden und die Bewegungsänderung der Einheiten außerhalb der prozessrelevanten Bereiche den kollisionsfreien Ablauf aller Einheiten miteinander in einem Zustand erlaubt, innerhalb dessen wieder alle Teilbereiche in ihrem neuen Bewegungszustand zueinander definiert abgestimmt bewegt sind.

Beispielsweise kann ein Pressenstößel 2 in einem Bereich oberhalb des Grenzbereichs langsamer oder schneller fahren, so lange er zu jedem relevanten Zeitpunkt außerhalb des Grenzbereichs der Transfereinheit 4 bleibt. Damit können Freiheitsgrade für den Umformprozess und dessen Geschwindigkeit und/oder für die Transferbewegung flexibel herbeigeführt werden.

### Bezugszeichenliste

- 1: Umformanlage
- 2: Pressenstößel
- 3: Pressenunterteil
- 4: Transfereinheit
- 5: Gelenkarm
- 6: Schließbewegung
- 7: Bewegungsbahn
- 10: Arbeitsbereich
- 21: Abstandsvektor
- 22: Abstandsvektor
- 23: Abstandsvektor
- 24: Grenzgeometrie
- 25: Balken
- 31: Position des Pressenstößels
- 32: Position des Pressenstößels
- 41: Bewegungsrichtung der Transfereinheit

- A1: Position des Pressenstößels
- T1: Position der Transfereinheit
- B1: Position des Pressenstößels
- T2: Position der Transfereinheit
- B2: Position des Pressenstößels
- T3: Position der Transfereinheit
- PP-I: Positionspaar
- PP-II: Positionspaar
- PP-III: Positionspaar
- PP-IV: Positionspaar

## Patentansprüche

1. Verfahren zur Bewegungssteuerung einer Umformanlage (1), wobei die Umformanlage mindestens zwei bewegte Einheiten (2,4), insbesondere einen Pressenstößel (2) und eine Transfereinheit (3), umfasst,
- wobei eine Mehrzahl an Positionspaaren (PP) ermittelt wird,
- wobei ein Positionspaar eine Position (T1, T2, T3) einer ersten bewegten Einheit (4), insbesondere eine Transfereinheit (4) und eine Position (B1, B2) einer zweiten bewegten Einheit (2), insbesondere eines Pressenstößels (2) umfasst,
- wobei dem Positionspaar (PP) ein Positionskriterium zugeordnet ist,
- wobei mindestens einer ersten Einheit (4) der Umformanlage (1) eine Grenzgeometrie (21, 22, 23, 24) zugeordnet ist, welche einen Abstand gegenüber einer Außenkontur der Einheit definiert,
- wobei eine Steuereinrichtung die Bewegungsabläufe der bewegten Einheiten (2,4) der Umformanlage (1) derart abstimmt, dass eine Bewegungssynchronisation im koordinierten Betrieb der Umformanlage erfolgt,
**dadurch gekennzeichnet, dass**
- das Positionskriterium ein Positivkriterium (+) für eine erlaubte Position oder ein Negativkriterium (x) für eine verbotene Position umfasst,
- wobei ein Positivkriterium (+) demjenigen Positionspaar (PP-I, PP-II, PP-IV) zugeordnet ist, bei welchem sich die zweite bewegte Einheit (2) außerhalb der Grenzgeometrie (24) der ersten bewegten Einheit (4) befindet,
- wobei ein Negativkriterium (x) demjenigen Positionspaar (PP-III)zugeordnet ist, bei welchen sich die zweite bewegte Einheit (2) zumindest teilweise innerhalb der Grenzgeometrie (21,24) der ersten bewegten Einheit (4) befindet,
- wobei die Steuereinrichtung Positionspaare (PP-I, PP-II, PP-III, PP-IV) zur Abstimmung der Bewegungsabläufe heranzieht, welche ein Positivkriterium (+) umfassen, und somit die zweite bewegte Einheit (2) im Abstand zur ersten bewegten Einheit (4) in einem positiven Bewegungsraum außerhalb der Grenzgeometrie (21, 22, 23, 24) der ersten bewegten Einheit (4) bewegt wird, und welche ein Negativkriterium (x) umfassen und damit einen unzulässigen negativen Bewegungsraum für die zweite bewegte Einheit (2) darstellen.

2. Verfahren nach Anspruch 1, **dadurch gekennzeichnet, dass** die Steuereinrichtung zur Abstimmung der Bewegungsabläufe ermittelt, wann der Übergang von einem Positionspaar (PP-III) mit Negativkriterium (x) zu einem Positionspaar (PP-IV) mit Positivkriterium (+) erfolgt, und aus dem Übergang den erlaubten, positiven Bewegungsraum der zweiten bewegten Einheit (2), außerhalb der Grenzgeometrie (21, 22, 23, 24) der ersten bewegten Einheit (4) definiert, in welchem ein Bewegungsablauf der zweiten bewegten Einheit (2) flexibel, insbesondere ohne Ermittlung weiterer konkreter Positionspaare, abgestimmt werden kann.

3. Verfahren nach Anspruch 1 oder 2, **dadurch gekennzeichnet, dass** die Bewegungsabläufe der bewegten Einheiten (2,4) der Umformanlage (1) in prozessrelevante Bewegungsabschnitte und prozessunabhängige Bewegungsabschnitte unterteilt sind, wobei die Steuereinrichtung eine Anpassung der Bewegungsabläufe auf der Basis von Positionspaaren und Grenzgeometrien nur außerhalb der prozessrelevanten Bewegungsabschnitte vornimmt.

4. Verfahren nach einem der vorangegangenen Ansprüche, **dadurch gekennzeichnet, dass** virtuelle Positionspaare durch Simulation ermittelt werden, insbesondere unter Einsatz eines CAD-Modells der Umformanlage virtuell ermittelt werden.

5. Verfahren nach einem der vorangegangenen Ansprüche, **dadurch gekennzeichnet, dass** reale Positionspaare durch schrittweises Anfahren der Positionen (B,T) der bewegten Einheiten (2,4) in der Umformanlage selbst real ermittelt werden.

6. Verfahren nach einem der vorangegangenen Ansprüche, **dadurch gekennzeichnet, dass** die Steuereinrichtung zur Abstimmung der Bewegungsabläufe Dynamikkriterien der einzelnen bewegten Einheiten (2,4) heranzieht, insbesondere Trägheitskriterien, Antriebskriterien sowie dynamische Grenzwertkriterien wie beispielsweise Belastungsgrenzen.

7. Verfahren nach einem der vorangegangenen Ansprüche, **dadurch gekennzeichnet, dass** die Grenzgeometrie durch mindestens einen Abstandsvektor, vorzugsweise mehrere diskrete Abstandsvektoren definiert ist.

8. Verfahren nach einem der vorangegangenen Ansprüche, **dadurch gekennzeichnet, dass** die Grenzgeometrie ist durch eine einhüllende Grenzfläche im Abstand zur Oberfläche der bewegten Einheit definiert ist.
